Europäisches Patentamt

European Patent Office

Office européen des brevets

(19)

(11) Veröffentlichungsnummer: **0 012 861**
**B1**

(12) **EUROPÄISCHE PATENTSCHRIFT**

(45) Veröffentlichungstag der Patentschrift: **09.03.83**

(21) Anmeldenummer: **79104722.8**

(22) Anmeldetag: **27.11.79**

(51) Int. Cl.³: **G 01 N 21/88,**
**G 01 N 1/28, G 01 N 1/32**
**//H01L21/302, C23F1/00**

(54) Verfahren zum selektiven Feststellen von durch Polieren verursachten Fehlern auf der Oberfläche von Siliziumplättchen.

(30) Priorität: **29.12.78 US 974586**

(43) Veröffentlichungstag der Anmeldung:
**09.07.80 Patentblatt 80/14**

(45) Bekanntmachung des Hinweises auf die Patenterteilung:
**09.03.83 Patentblatt 83/10**

(84) Benannte Vertragsstaaten:
**DE FR GB**

(56) Entgegenhaltungen:
**DE - A - 1 965 408**
**DE - A - 2 010 448**
**DE - B - 2 225 366**
**US - A - 3 728 179**
**US - A - 3 834 959**

Die Akte enthält technische Angaben, die nach dem Eingang der Anmeldung eingereicht wurden und die nicht in dieser Patentschrift enthalten sind.

(73) Patentinhaber: **International Business Machines Corporation**
**Armonk, N.Y. 10504 (US)**

(72) Erfinder: **Shih, Kwang Kuo**
**2322 Vista Court**
**Yorktown Heights, New York 10598 (US)**

(74) Vertreter: **Rudack, Günter O., Dipl.-Ing.**
**c/o International Business Machines Corporation**
**Zurich Patent Operations Säumerstrasse 4**
**CH-8803 Rüschlikon (CH)**

(56) Entgegenhaltungen:
**Electrochem Soc., Solid State Science & Technology, vol. 123, No. 5, S. 734—741**

**Electrochem Soc., Solid State Science, Vol. 114, No. 9, S. 965—970**

Courier Press, Leamington Spa, England.

## Verfahren zum selektiven Feststellen von durch Polieren verursachten Fehlern auf der Oberfläche von Siliziumplättchen

Die Erfindung betrifft ein Verfahren zum selektiven Feststellen von durch Polieren verursachten Fehlern auf der Oberfläche von Siliziumplättchen.

Bei der Herstellung von Siliziumvorrichtungen für nicht-elektronische Zwecke besteht das Bedürfnis, Oberflächenfehler auf Siliziumplättchen zu entfernen. Mechanische und/oder chemische Polierverfahren werden benutzt, um diese Oberflächenfehler zu beseitigen. Es hat sich jedoch gezeigt, dass die Oberflächen gerade durch das Polieren beschädigt werden können. Es ist daher nötig, nach dem Polieren und vor der Weiterverarbeitung die Siliziumplättchen aus Oberflächenfehler zu untersuchen.

Oberflächenfehler können bei nicht-elektronischen Anwendungen, wie beispielsweise in Düsen für Tintenstrahldrucker zu schlecht definierten Geometrien führen. Beispielsweise ist es bei der Fabrikation von Tintenstrahldüsen erwünscht, durch Aetzen quadratische Löcher herzustellen. Durch Oberflächenfehler können sich jedoch abweichende Geometrien ergeben, d.h. die Löcher können elliptische oder rechteckige Form annehmen. Ausserdem können diese Oberflächenfehler zu muschelartigen Ausbuchtungen der Wände der Tintenstrahldüse führen, wo diese eigentlich glatt sein sollten. Bei elektronischen Anwendungen können die Oberflächenfehler kleine Ausbeute, vermehrte Kurzschlüsse und Ungleichmässigkeit der elektrischen Eigenschaften sowie Abweichungen des dielektrischen Verhaltens herbeiführen.

Mit Aetzmitteln arbeitende Verfahren zum Erkennen von Versetzungen und anderen Gitterfehlern bei Kristallen sind bekannt. Aetzmittel für solche Zwecke sind beschrieben in F. Secco d'Aragona, "Dislocation Etch for (100) Planes in Silicon", J. Electrochem. Soc., Solid-State Science and Technology, S. 948, Juli 1972. Diese Veröffentlichung beschreibt die Benutzung eines Aetzmittels aus Alkalidichromat und Flussäure für die Sichtbarmachung von Versetzungen und anderen Gitterfehlern in den (100)-Flächen von Silizium. In dem Artikel von D. C. Schimmel, "A Comparison of Chemical Etches for Revealing (100) Silicon Crystal Defects", J. Electrochem. Soc., Solid-State Science and Technology, S. 734, Mai 1976 werden die Wirkungen von Aetzmitteln und ihre Fähigkeit zum Sichtbarmachen von Versetzungen und anderen Gitterfehlern verglichen. Insbesondere werden Aetzmittel wie das Chromate-HF und seine Varianten sowie HF-HNO$_3$ und Varianten untersucht. Die genannten Referenzen befassen sich jedoch nicht mit der Erkennung von nichtstrukturbedingten Fehlern, die durch das Polieren von Siliziumoberflächen entstehen.

Das Verfahren gemäss der vorliegenden Erfindung verwendet ein ternäres Aetzmittel, welches aus Pyrocatechol, Aethylenamin und Wasser besteht. Die einzelnen Verfahrensschritte ergeben sich aus Anspruch 1.

Die für das zu beschreibende Verfahren verwendeten Aetzmittel sind bekannt. Sie sind beschrieben in einer Publikation von R. M. Finne und D. L. Klein "A Water-Amine-Complexing Agent System for Etching Silicon" J. Electrochem. Soc., Solid-State Science, S. 965, Sept. 1967. In dieser Publikation wird speziell darauf hingewiesen, dass Pyrocatechol-Amin-Wasser-Lösungen mit Vorteil zum Aetzen von Silizium verwendet werden können. Ferner wird ausgeführt, dass diese Aetzmittel zum Erkennen von Fehlern in Oxidschichten auf der Oberfläche von Siliziumplättchen verwendet werden können. Es findet sich jedoch kein Hinweis darauf, dass diese Aetzmittel auch zum Sichtbarmachen von Oberflächenfehlern verwendet werden können, die durch das Polieren der Siliziumplättchen entstehen.

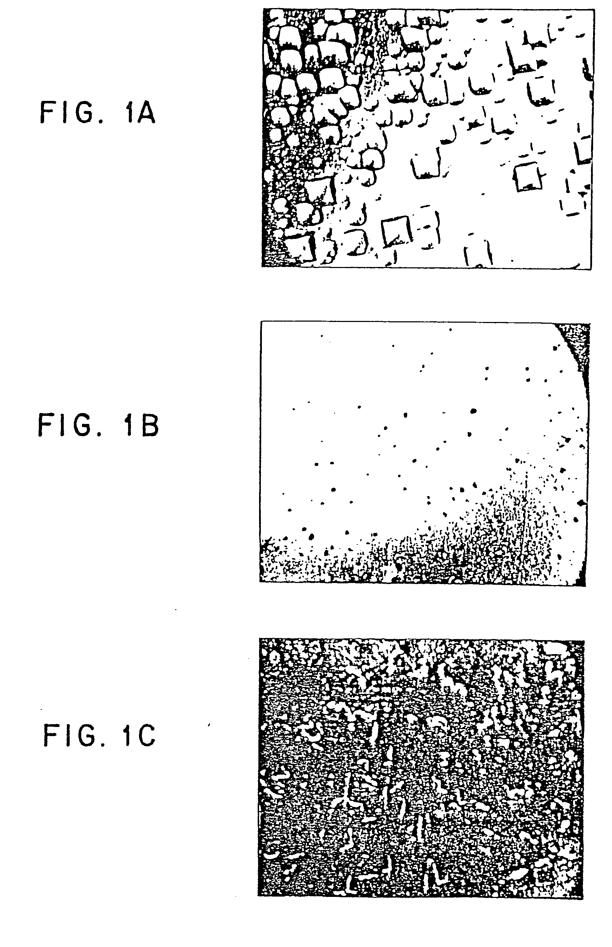

Einzelheiten eines Ausführungsbeispiels des erfindungsgemässen Verfahrens werden mit Hinweis auf die Zeichnungen hiernach beschrieben. In den Zeichnungen zeigen Fig. 1A, 1B und 1C Oberflächenfehler auf einem Siliziumplättchen, die mit Pyrocatechol-Amin-Wasser-Aetzmittel (1A), Secco-Aetzmittel (1B) und Sirtl-Aetzmittel (1C) behandelt worden sind.

Bei der konventionellen Herstellung von Siliziumplättchen werden Scheiben von Siliziumbarren abgeschnitten und zunächst mechanisch geläppt, um eine ebene Oberfläche herzustellen, dann mit Säure behandelt, um Fehler zu entfernen, darauf chemisch-mechanisch poliert, um eine glatte und fehlerfreie Oberfläche zu erzielen. In der Praxis sind polierte Oberflächen jedoch nicht frei von Fehlern. Bisher wurden Plättchen dann zum Sichtbarmachen von Oberflächenfehlern in Sirtl- oder Secco-Aetzmitteln geätzt, die in den zitierten Publikationen beschrieben sind. Diese Aetzmittel zeigen nicht nur die Oberflächenfehler als mikroskopisch kleine Vertiefungen, sie zeigen auch eingewachsene Wirbelfehler als mikroskopisch kleine Vertiefungen.

Es hat sich herausgestellt, dass die von Finne und Klein beschriebene Pyrocatechol-Aethylendiamin-Wasser-Lösung sich hervorragend als Aetzmittel eignet für die Sichtbarmachung von Oberflächenfehlern. Dieses Aetzmittel zeigt die Oberflächenfehler so gross, dass sie mit dem unbewaffneten Auge beobachtet und gezählt werden können.

Für die Zwecke der vorliegenden Erfindung wird die Aetzlösung hergestellt durch Lösen von 100 bis 120 Gramm Pyrocatechol, 750 bis 1000 Milliliter Aethylendiamin in etwa 120 bis 240 Milliliter Wasser. Die Lösung wird während des Aetzvorgangs bei einer Temperatur zwischen 90°C und 120°C gehalten. Das zu untersuchende Siliziumplättchen wird während zwei bis zehn Minuten in die Aetzlösung eingetaucht.

Bei einem bevorzugten Ausführungsbeispiel des erfindungsgemässen Verfahrens besteht das Aetzmittel aus 120 Gramm Pyrocatechol, 750 Milliliter Aethylendiamin und 240 Milliliter Wasser. Die Lösung wird bei einer Temperatur von 118°C gehalten und das Plättchen wird während fünf Minuten in die Aetzlösung eingetaucht.

Für die Erkennung sehr kleiner Fehler d.h. Fehler von weniger als einem halben $\mu$m, sind folgende Verfahrensschritte auszuführen:

a) Aufwachsen eines Oxidfilms auf der Oberfläche eines gereinigten Siliziumplättchens

b) Eintauchen des Siliziumplättchens in gepufferte Flussäure zum Entfernen des Oxidfilms von der Oberfläche des Plättchens

c) Spülen des oxidfreien Plättchens in Wasser

d) Eintauchen des gespülten Plättchens in eine Pyrocatechol-Amin-Wasser-Aetzlösung

e) Spülen des so behandelten Plättchens in Wasser und

f) Untersuchung der Plättchenoberfläche auf Fehler.

Die Oxidschicht wird auf dem polierten und gereinigten Siliziumplättchen aufgewachsen, um sehr kleine Fehler d.h. Fehler kleiner als $\frac{1}{2}$ $\mu$m hervorzuheben. Die Oxidschicht kann thermisch mittels konventioneller Verfahren aufgebracht werden. Die Dicke der Oxidschicht kann zwischen 1000 Å und 5000 Å betragen. Falls die Oberflächenfehler grösser sind als $\frac{1}{2}$ $\mu$m, kann auf die Bildung der Oxidschicht verzichtet werden. Die Oxidbildung sollte jedoch unbedingt durchgeführt werden, wenn die Fehlergrösse unter $\frac{1}{2}$ $\mu$m liegt, da die Fehler sonst nicht leicht erkennbar sind.

Die Siliziumplättchen können wir gewohnt in einer konventionellen Siliziumreinigungsflüssigkeit, wie beispielsweise die bekannte Hwang-Lösung, gereinigt werden.

Bei einem bevorzugten Ausführungsbeispiel des Verfahrens wurde ein Plättchen einer thermischen Oxidation unterzogen, bis ein $SiO_2$-Film von ungefähr 5000 Å auf seiner Oberfläche aufgewachsen war. Das Plättchen wurde dann für etwa 10 Minuten in gepufferte Flussäure eingetaucht, bis der $SiO_2$-Film gelöst oder weggeätzt war. Nach dem Spülen des Plättchens in Wasser wurde es in eine Aetzlösung eingetaucht, die 120 Gramm Pyrocatechol und 750 Milliliter Aethylendiamin, in 240 Milliliter Wasser gelöst, enthielt und auf 118°C erwärmt worden war. Das Plättchen blieb für 5 Minuten eingetaucht und wurde dann wieder in Wasser gespült.

Wenn sich herausstellt, dass die Oberflächenfehler grösser als $\frac{1}{2}$ $\mu$m sind, kann das oben beschriebene Verfahren ohne den Oxidationsschritt angewandt werden.

Die Untersuchung der so behandelten Plättchen kann mit dem blossen Auge oder unter dem Mikroskop erfolgen. Im allgemeinen werden die Plättchen ausgeschieden, wenn die Fehlerdichte grösser als 1 cm$^2$ ist oder wenn sich ein Kratzer innerhalb einer Fläche mit dem Radius 0,8 r vom Zentrum des Plättchens findet. Fig. 1A zeigt die Oberflächenfehler auf einem Siliziumplättchen, welches nach dem erfindungsgemässen Verfahren behandelt wurde. Die Fehler können mit dem blossen Auge leicht festgestellt werden, während bei ähnlichen Plättchen, die nach vorbekannten Verfahren behandelt wurden, z.B. mit den Aetzmitteln nach Secco und Sirtl, können die Fehler zumindest mit dem blossen Auge nur schlecht beobachtet werden. Solche Plättchen sind in den Fig. 1B und 1C abgebildet. Fig. 1C ist 100 fach vergrössert.

Die mit den Aetzmitteln nach Secco und Sirtl geätzten Plättchen wurden entsprechend den in der Publikation von D. C. Schimmel "A Comparison of Chemical Etches for Revealing (100) Silicon Crystal Defects", J. Electrochem. Soc., Solid-State Science and Technology, S. 734, Mai 1976, angegebenen Verfahren behandelt.

**Patentansprüche**

1. Verfahren zum selektiven Feststellen von durch Polieren verursachten Fehlern auf der Oberfläche von Siliziumplättchen, gekennzeichnet durch das Eintauchen des Siliziumplättchens in eine Aetzlösung aus Pyrocatechol, Aethylendiamin und Wasser, bis die Oberflächenfehler auf dem Plättchen sichtbar werden, und Spülen des Plättchens in Wasser und Untersuchen seiner Oberfläche auf Fehler.

2. Verfahren nach Patentanspruch 1, dadurch gekennzeichnet, dass, falls die Oberflächenfehler kleiner als $\frac{1}{2}$ $\mu$m sind, vor dem Eintauchen des Siliziumplättchens in die Aetzlösung die folgenden Schritte ausgeführt werden:

a) Aufwachsen einer $SiO_2$-Schicht auf der Oberfläche des Plättchens,

b) Eintauchen des Plättchens in gepufferte Flussäure, bis die $SiO_2$-Schicht weggeätzt ist,

c) Spülen des $SiO_2$-freien Plättchens in Wasser.

3. Verfahren nach Patentanspruch 1 oder 2, dadurch gekennzeichnet, dass das Eintauchen des Plättchens in eine Aetzlösung aus 100 bis 120 g Pyrocatechol, 750 bis 1000 ml Aethylendiamin und 120 bis 240 ml Wasser erfolgt.

4. Verfahren nach Patentanspruch 3, dadurch gekennzeichnet, dass das Eintauchen in eine Aetzlösung aus 120 g Pyrocatechol, 750 ml Aethylendiamin und 240 ml Wasser erfolgt.

5. Verfahren nach Patentanspruch 4, dadurch gekennzeichnet, dass die Temperatur der Aetzlösung zwischen 90° und 120°C gehalten wird.

6. Verfahren nach Patentanspruch 5, dadurch gekennzeichnet, dass die Temperatur der Aetzlösung bei 118°C gehalten wird.

7. Verfahren nach Patentanspruch 2, dadurch gekennzeichnet, dass das mit der $SiO_2$-Schicht

bedeckte Plättchen während 10 bis 30 Minuten in gepufferte Flussäure eingetaucht wird.

8. Verfahren nach Patentanspruch 1, dadurch gekennzeichnet, dass das Plättchen während 2 bis 10 Minuten in die Aetzlösung eingetaucht wird.

**Revendications**

1. Procédé pour détecter sélectivement des défauts causés par le polissage sur la surface de plaquettes de silicium, caractérisé par l'immersion de la plaquette de silicium dans une solution de décapage composée de pyro-téchine, d'éthylène diamine et d'eau, jusqu'à ce que le défaut de surface soit visible sur la plaquette, et par le rinçage de la plaquette dans l'eau et l'examen de sa surface pour la recherche de défauts.

2. Procédé selon la revendication 1, caractérisé en ce que, dans le cas d'un défaut de surface inférieur à 0,5 μm, on procède avant l'immersion de la plaquette de silicium dans la solution de décapage aux étapes suivantes:

a) croissance d'une couche de SiO$_2$ sur la surface de la plaquette,

b) immersion de la plaquette dans de l'acide fluorhydrique tamponné jusqu'à ce que la couche de SiO$_2$ soit décapée,

c) rinçage de la plaquette dépourvue de SiO$_2$ dans l'eau.

3. Procédé selon la revendication 1 ou 2, caractérisé en ce que la plaquette est immergée dans une solution de décapage composée de 100 à 120 g de pyrocatéchine, de 750 à 1000 ml d'éthylène diamine et de 120 à 240 ml d'eau.

4. Procédé selon la revendication 3, caractérisé en ce que l'immersion utilise une solution de décapage composée de 120 g de pyrocatéchine, de 750 ml d'éthylène diamine et de 240 ml d'eau.

5. Procédé selon la revendication 4, caractérisé en ce que la température de la solution de décapage est maintenue entre 90 et 120°C.

6. Procédé selon la revendication 5, caractérisé en ce que la température de la solution de décapage est maintenue à 118°C.

7. Procédé selon la revendication 1, caractérisé en ce que la plaquette recouverte d'une couche de SiO$_2$ est immergée pendant 10 à 30 minutes dans de l'acide fluorhydrique tamponnée.

8. Procédé selon la revendication 1, caractérisé en ce que la plaquette est immergée pendant 2 à 10 minutes dans la solution de décapage.

**Claims**

1. Method for selectively detecting defects caused by polishing on the surface of silicon wafers, characterized by immersing the silicon wafer in an etch solution comprising pyrocatechol, ethylene diamine and water, until the surface defects become visible on the wafer, and rinsing the water in water and inspecting the surface for defects.

2. Method according to claim 1, characterized in that, provided the surface defects are smaller than $\frac{1}{2}$ μm, prior to immersing the silicon wafer in the etch solution the following steps are performed:

a) growing a SiO$_2$ layer on the surface of the wafer;

b) immersing the wafer in buffered hydrofluoric acid until the SiO$_2$ layer is etched off;

c) rinsing the SiO$_2$-free wafer in water.

3. Method according to claim 1 or 2, characterized in that the immersion of the wafer is in an etch solution comprising from 100 to 200 g pyrocatechol, from 750 to 1000 ml ethylene diamine, and from 120 to 240 ml water.

4. Method according to claim 3, characterized in that the immersion is in an etch solution comprising 120 g pyrocatechol, 750 ml ethylene diamine and 240 ml water.

5. Method according to claim 4, characterized in that the temperature of the etch solution is maintained between 90° and 120°C.

6. Method according to claim 5, characterized in that the temperature is maintained at 118°C.

7. Method according to claim 1, characterized in that the wafer coated with the SiO$_2$ layer is immersed in hydrofluoric acid for 10 to 30 minutes.

8. Method according to claim 1, characterized in that the wafer is immersed in the etch solution for 2 to 10 minutes.

0012 861

FIG. 1A

FIG. 1B

FIG. 1C

1